(19) Europäisches Patentamt
European Patent Office
Office européen des brevets

(11)  **EP 2 024 290 B1**

(12)  **EUROPEAN PATENT SPECIFICATION**

(45) Date of publication and mention
of the grant of the patent:
**28.04.2010  Bulletin 2010/17**

(21) Application number: **08701275.3**

(22) Date of filing: **07.01.2008**

(51) Int Cl.:
***C03B 37/023*** (2006.01)    ***C03C 25/62*** (2006.01)

(86) International application number:
**PCT/EP2008/050099**

(87) International publication number:
**WO 2008/084030 (17.07.2008 Gazette 2008/29)**

(54)  **METHOD AND SYSTEM FOR PRODUCING AN INFRARED TRANSMITTING FIBER**

VERFAHREN UND SYSTEM ZUR HERSTELLUNG EINER INFRAROTÜBERTRAGUNGSFASER

PROCÉDÉ ET SYSTÈME DE PRODUCTION D'UNE FIBRE À TRANSMISSION INFRAROUGE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.01.2007  EP 07100268
09.01.2007  US 884037 P**

(43) Date of publication of application:
**18.02.2009  Bulletin 2009/08**

(73) Proprietors:
• **Hristoforou, Evangelos Vassilios
11256 Athens (GR)**
• **Schwartz Navarro, Simón
08440 Cardede (ES)**

(72) Inventors:
• **Hristoforou, Evangelos Vassilios
11256 Athens (GR)**
• **Schwartz Navarro, Simón
08440 Cardede (ES)**

(74) Representative: **ZBM Patents
Zea, Barlocci & Markvardsen
Plaza Catalunya, 1
08002 Barcelona (ES)**

(56) References cited:
**US-A- 4 253 731    US-A- 4 557 742
US-A- 4 978 376    US-A- 5 314 519**

## Description

The present invention relates to a method for producing an infrared transmitting fiber. More specifically, the invention relates a method for manufacturing and treating step index infrared transmitting fibers, for example, silver halide fibers (AgBr:AgCl).

The invention also relates to a system for producing an infrared transmitting fiber suitable for carrying out such a method.

## BACKGROUND ART

Research on infrared transmitting fibers (e.g. infrared optical fibers) began as early as the decade of 1960. The motivation for this research was the theoretically low losses of the infrared transmitting fibers regarding to the losses of the silicate optical fibers, which suggested that the infrared fibers would be able to replace optical fibers in telecommunications. However, nowadays, the losses in infrared transmitting fibers are around 50 dB/km, which are orders of magnitude higher than the losses of standard telecommunication fibers. This feature has been reported, for example, in [L.N. Butvina, E.M. Dianov, N.V. Lichkova, Proc. of SPIE, vol. 4083, 238-253]. There are many reasons for the gap between theoretical and experimental losses that have been extensively discussed in many publications like the one from [V.G. Artjushenko, L.N. Butvina, V. V. Vojtsekhovsky, E.M. Dianov, J.G. Kolesnikov, J.of Lightwave Technology, vol. LT-4, No.4, 461-464].

However, Infrared optical fibers still have an advantage over optical fibers, said advantage being the broad spectral width that the infrared fibers are capable of transmitting. Typical values for AgBrCl fibers lay in the region between 2-20 μm. Such a capability makes these fibers ideal candidates for medical sensing applications as is described in [J. Keirsse, C. Boussard-Pledel, O. Loreal, B. Bureau, P. Leroyer, B. Turlin, J. Lucas, Vibrational Spectroscopy 32 (2003) 23-32], [S. Artjushenko, V. Ionov, K. Kalaidjian, A. Kryukov, E. Kuzin, A. Lerman, A. Prokhorov, E.Stepanov, Proc. of SPIE, vol.2396, 25-35], and [Manabu Shibasaki, Narihiko Kondo, Hirotaka Tominaga, Ken Aoki, Eiichi Hasegawa, Yoshiyuki Idota, Toshimichi Moriwaki, J. Appl. Physiol. 85(3): 921-926, 1998] or general sensing as is described in [D. Le Coq, C. Boussard-Pledel, G. Fonteneau, T.Pain, B. Bureau, J.L. Adam, Materials Research Bulletin 38 (2003) 1745-1754] and [S. Hocde, C. Boussard-Pledel, G. Fonteneau, J. Lucas, Solid State Sciences 3 (2001) 279-284]. Finally, an infrared trasmitting fiber can be used as a flexible thermal imaging probe as described in [E. Rave, D. Shemesh, A. Katzir, Applied Physics Letters, vol. 76, no. 14 (2000), 1795-1797].

Methods widely used for producing infrared transmitting fibers are known, such as the method described in [X. G. Tang, X. X. Wang, K. H. Chew, H. L. W. Chan, Solid State Communications 136 (2005) 89-93].

Said method of production is cold extrusion, using high strength materials and very high pressures. Therefore, this is an expensive production method.

The UK patent application, with publication number GB 1982-2092771 A and title "*Optical fibres with graded index crystalline core*", discloses a method for producing an optical fiber from a preform consisting of a glassy tube filled with a mixture of two or more crystalline materials existing in solid solution, which mixture melts at a temperature at which the glassy tube still has sufficiently good mechanical properties to be capable of acting as a container for the molten mixture. Said preform is mounted in a fiber drawing apparatus and, provided that the softening point of the glass tube is not very much higher than the melting point of its contents, the drawing operation can be performed at a sufficiently high temperatures to enable fiber to be drawn at speeds comparable with those used for drawing from all-glass performs. Upon leaving the drawing zone the tube and its contents cool with the result that the tube contents recrystallises in polycrystalline form with a radially graded distribution of refractive index. The resulting fiber may then be indefinitely stored for instance on a drum until required for conversion into single crystal form. This conversion is effected by passing the fiber through a short hot zone in which the crystalline material is briefly fused.

US 4, 978, 376 discloses a crystalline metal halide optical fiber having a two or a three layer structure.

US 4, 557, 742 discloses a polarized optical fiber having inherent birefringence provided by electrically induced orientation of its monocrystalline structure providing fixed polarization.

## DISCLOSURE OF THE INVENTION

An object of the invention is therefore to provide a method for producing an infrared transmitting fiber with low cost.

This object is achieved in accordance with claim 1 by providing a method for producing an infrared transmitting fiber comprising the steps of providing (A) a preform of the infrared transmitting fiber to be produced, said preform comprising a receptacle, which is the precursor of the fiber's cladding, and a solid solution provided inside said receptacle, said solid solution being the precursor of the fiber's core; heating (B) the fiber's preform up to a temperature in which the receptacle softens and the solid solution melts; collecting (C) the flow generated by the softened receptacle; drawing (D) the fiber from the collected flow further characterised in heating (F) the provided fiber up to a temperature in which its electric dipoles are free; applying (G) an electrostatic field to the heated fiber for moving the electric dipoles towards the direction of the applied electrostatic field.

In this way, it is possible to obtain an infrared transmitting fiber only applying heat to a fiber's preform, without using, for example, expensive materials or especial environmental conditions that increase the cost of manufacturing.

Another advantage of the claimed invention is that it is possible to produce any length of fiber with adequate quality, said length being able to depend on the height of the receptacle (any fiber length can be produced with a single pass using the right receptacle). Also, it is possible to produce variable diameters of the fiber (e.g., it is possible to produce infrared fibers of different external and inner core diameter) with the same production line.

Another yet advantage of the invention is that the manufacturing of an infrared transmitting fiber takes place much faster than any known method.

Furthermore, with said treatment of the fiber it is possible to improve the optical quality of the produced fiber. After the treatment a fiber can exhibit improved optical transmission, up to a level (e.g., levels of 40% and above at the near IR region) that makes them usable in most sensing applications. Consequently, two advantages are achieved with the described steps for treating the fiber: the improvement in optical quality through the relaxation of the fiber's core caused by the thermal annealing and the rearrangement of the more flexible dipoles, due to the strong electrostatic field, so that a better structural periodicity is achieved inside the core.

According to another embodiment of the invention, the method comprises, before step (A), the steps of introducing (H) appropriate amounts of ultrapure powders inside the receptacle; heating (I) the receptacle up to a temperature in which the powders melt; cooling down (J) the receptacle to room temperature for obtaining the solid solution inside the receptacle.

With the described steps, a possible fiber's preform is obtained. Basically, the solid solution of the fiber's core is formed inside the receptacle, which is the preform that will be used for the fiber drawing.

According to a particular embodiment of the invention, in step (B), the fiber's preform is heated up to a temperature comprised between 600-800ºC for a period comprised between 0,25-1,5 minutes. In this case, the receptacle may be made of glass and the solid solution may be a silver halide. It is important to highlight that the values of temperature and/or time depend on determined variables such that the material of the receptacle, the components of the solid solution, or the thickness of the receptacle's wall. For example, if the material of the receptacle is Pyrex glass and its thickness is 1,5 mm, the temperature should be of around 700ºC and the time should be of 45-50 seconds (for a power of 10kW).

In another embodiment of the invention, in step (F), the provided fiber is heated up to a temperature comprised between 200-350ºC for a period comprised between 15-30 minutes.

On the other hand, in step (G), the applied electrostatic field may be up to 1,2 kV. Probably, said value can be limited by the equipment but it should be possible to obtain stronger electrostatic fields.

According to another embodiment of the invention, in step (H), the ultrapure powders comprise AgBr and AgCl, and, in step (I), the receptacle is heated up to a temperature comprised between 400-500ºC for a period comprised between 1-2 hours. Further, in step (J), the receptacle is cooled down for a period comprised between 4-6 hours.

According to another aspect, the invention provides a system for producing and infrared transmitting fiber comprising means for providing the preform; means for heating the preform; means for collecting the flow generated by the heated preform; and means for drawing the fiber from the collected flow.

In a preferred embodiment of the invention, the means for heating the preform comprise an induction furnace. Said induction furnace may comprise a coil and a graphite dye. When the induction furnace is put into use and the electrical current flows through the coil, it generates a very fast increase in the temperature of the graphite dye which, after few seconds, softens the receptacle. The means for collecting the flow may comprise a drum which collects the softened receptacle flow and draws the fiber.

Furthermore, the system may comprise means for providing the fiber produced by the system described above; further characterised in that it comprises means for heating said provided fiber; and means for applying an electrostatic field to the heated fiber.

According to an embodiment of the invention, the means for heating the provided fiber comprise a furnace. Basically, the furnace may be a custom made cylindrical furnace of 10 cm of length capable of reaching temperatures up to 800ºC.

According to another embodiment, the means for applying an electrostatic field comprise a capacitor. Said capacitor may be an orthogonal shaped capacitor capable of creating electrostatic fields up to 1,2 kV between its plates, through a flyback transformer.

In a preferred embodiment of the invention, the system further comprises means for introducing appropriate amounts of ultrapure powders inside the receptacle; means for heating the receptacle up to a temperature in which the powders melt; and means for cooling down the receptacle to room temperature.

The means for heating the receptacle up to a temperature in which the powders melt may comprise an inert atmosphere furnace. Said furnace may be filled with argon and during the whole process a small amount of argon flow may be applied inside the furnace so that no atmospheric air flows back inside the furnace.

In another preferred embodiment, the receptacle is made of glass with one end closed and the other end opened in order to allow inert gas flow (the pressure of the inert gas may define the diameter of the inner core)..

On the other hand, the solid solution may be a silver halide, said silver halide being able to comprise AgBr and AgCl in 1:1 mole analogy.

According to another aspect of the invention, it provides a method for treating an infrared transmitting fiber comprising the steps of (K) providing the fiber to be treated further characterised in (L) heating the provided fiber up to a temperature in which its electric dipoles are free; (M) applying an electrostatic field to the heated fiber for moving the electric dipoles towards the direction of the applied electrostatic field.

BRIEF DESCRIPTION OF THE DRAWINGS

In the following detailed description of some possible embodiments, other features and advantages of the invention will appear, each description being made with reference to the following drawings:

Fig.1 is a flow chart illustrating the group of steps for obtaining the fiber's preform according to the method for producing an infrared transmitting fiber of the invention;

Fig.2 is a schematic diagram illustrating an exploded view of the elements for fabricating the infrared transmitting fiber from the fiber's preform of Fig.1, said elements being comprised in the system for producing an infrared transmitting fiber, according to the invention;

Fig.3 is a schematic diagram illustrating the elements for fabricating the infrared fiber of Fig.2, the graphite dye being inserted in place into the coil of the induction furnace;

Fig.4 is a schematic diagram illustrating the elements for fabricating the infrared fiber of Fig.2, in which the fiber's preform is laid inside the graphite dye;

Fig.5 is a schematic diagram illustrating the elements for fabricating the infrared fiber of Fig.2, in which the ampoule of the preform reaches its softening point and flows from the lower end of the graphite dye;

Fig.6 is a flow chart illustrating the group of steps for fabricating the infrared transmitting fiber from the fiber's preform obtained in Fig.1 according to the method for producing an infrared transmitting fiber of the invention;

Fig.7a is a schematic diagram illustrating the elements of the setup for treating the infrared fiber obtained in Fig.6, according to an embodiment of the invention;

Fig.7b is a schematic diagram illustrating the elements of the setup for treating the infrared fiber obtained in Fig.6, according to another embodiment of the invention;

Fig.7c is a schematic diagram illustrating the application of tensile stress to the infrared fiber obtained in Fig.6, during its treatment;

Fig.8 is a flow chart illustrating the group of steps for treating the fabricated fiber in steps of Fig.6 according to the method for producing an infrared transmitting fiber of the invention;

Fig.9a is a schematic diagram illustrating the distribution of the electric dipoles of the fabricated fiber before the treatment of Fig.8;

Fig.9b is a schematic diagram illustrating how electric field penetrates perpendicularly the fiber, resulting in an orientation of the electric dipoles shown in Fig.8 towards the direction of the electric field;

Fig.9c is a schematic.diagram illustrating how the electric field continues to penetrate perpendicularly the fiber until fiber is cooled down, when the temperature is lowered to the ambient environment temperature, resulting in remaining of the orientation of the electric dipoles towards the direction of the electric field;

Fig.9d is a schematic diagram illustrating fiber when the electric field is finally removed, after the temperature of the fiber reaches the ambient temperature, resulting in almost parallel orientation of the electric dipoles;

Fig.10a is a graphical representation of an electromagnetic wave transmission in the as-cast fiber;

Fig.10b is a graphical representation of an electromagnetic wave transmission in the electrically annealed fiber;

Fig.11 is a graphical representation of a FTI R response of the bulk inner material of the fiber (Ag-Br-Cl) ;

Fig.12 is a graphical representation of an indicative FTIR response of the as-cast fiber;

Fig.13 is a graphical representation of an indicative FTIR response of the fiber after heat annealing in 100$\underline{o}$C for 1 hour; and

Fig.14 is a graphical representation of an indicative FTI R response of the fiber after heat annealing in 100$\underline{o}$C for 1 hour with simultaneous application of electric field.

DETAILED DESCRIPTION

In the present description, a preferred embodiment of a method and a system for producing an infrared transmitting fiber will be described.

The method of said preferred embodiment can be disclosed in three groups of steps. The first group relates to the steps of obtaining a preform of the infrared fiber to be fabricated; the second one relates to the steps of fabricating the infrared fiber from the preform; and the third one relates to the steps of treating the fabricated infrared fiber for improving its infrared transmittance properties.

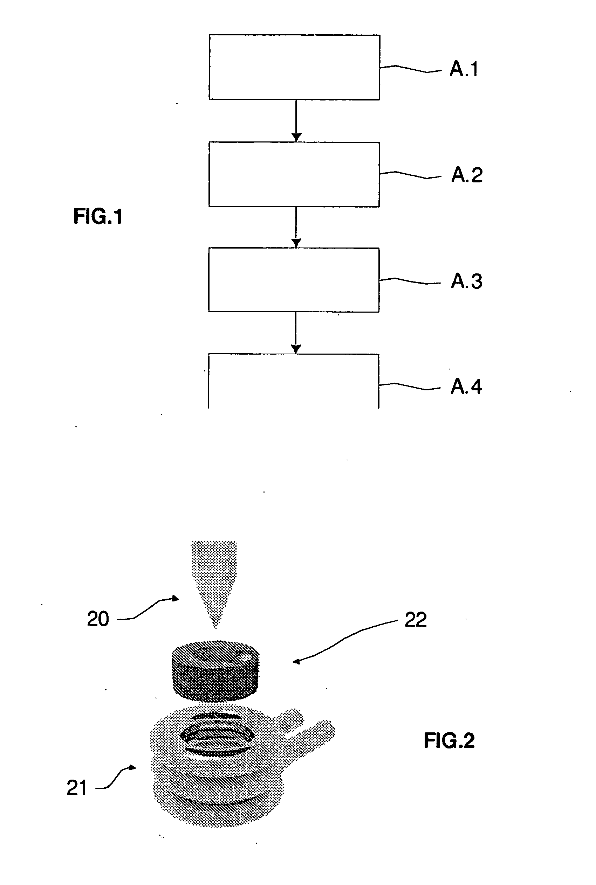

As can be seen in Fig.1, the first group of obtaining the prefrom comprises the following steps. Beginning in a step in which an ampoule is provided, in a step (H), calculated quantities of AgCl and AgBr ultrapure powders are introduced inside a custom made glass ampoule (e.g. Pyrex glass), which, in a step 10, is put inside an inert atmosphere furnace that is in turn filled with argon. Basically, the object is to obtain a highly viscous material covering a lower melting point core, so that the set that comprises the ampoule and the solid solution must fulfil the described requirements. Then, in a step (I), the ampoule is heated at 450ºC for 2 hours and, in a step (J), the temperature of the ampoule is dropped to room level in around 4 to 6 hours. During the whole process a small quantity of argon flow is applied inside the furnace so that no atmospheric air flows back inside the furnace. Obviously, the argon flow can be replaced by another inert gas flow such as nitrogen flow. In this way, the solid solution of the fiber's core is formed inside the glass ampoule which is the prefrom that will be used for the fiber drawing, that is, the solid solution is the precursor of the fiber's core whereas the glass ampoule is the precursor of the fiber's cladding.

Consequently, the obtained preform of the infrared transmitting fiber comprises a glass ampoule filled with a solid solution (a dielectric material), which is a mixture of two or more materials. Thus, for example, the solid solution is a solution of AgBr and AgCl in 1:1 mole analogy.

The fabrication of the infrared transmitting fiber from the obtained fiber's preform 20 takes place using a setup comprising an induction furnace 21 (in the form of a coil), a graphite dye 22 and a fiber collecting drum (not shown), as can be seen in Fig.2.

The graphite dye 22 is custom made so that its height does not exceed the height of a coil's ring of the induction furnace 21, which is done in order to avoid short circuiting of two rings of the coil while the furnace is working. In the middle of the graphite dye 22 a conical hole (not shown) was formed in order to have a tight matching between the graphite dye and the preform 20.

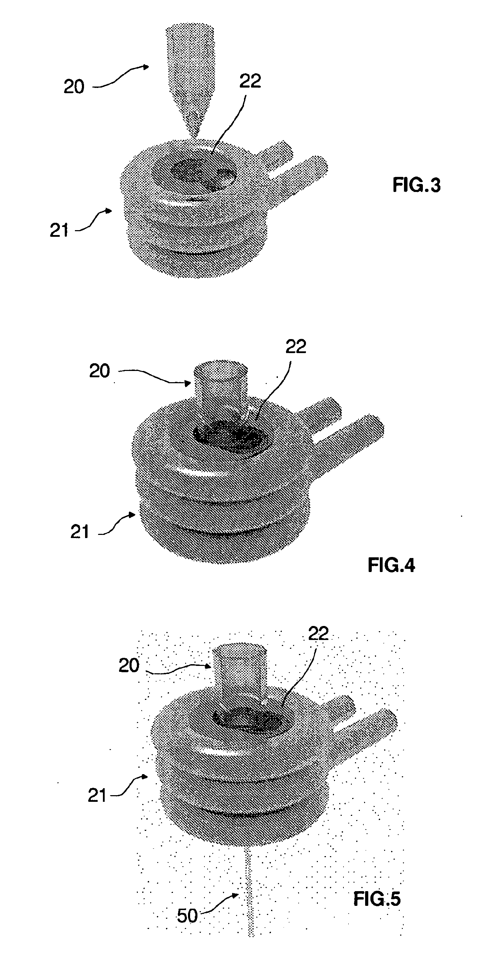

Then, as can be seen in Fig.3, the graphite dye 22 is put firmly inside the first ring of the coil of the induction furnace 21 and next (see Fig.4) the preform 20 is laid inside the graphite dye 22. At this point the induction furnace 21 is put into use and the electrical current that flows through the coil generates a very fast increase in the temperature of the graphite 22. After a few seconds, the heated graphite softens the Pyrex glass preform 20, while on the same time boils the solid solution of the core.

When the glass has reached its softening point, the glass (more specifically, the fiber 50) starts flowing from the lower end of the graphite dye 22 (see Fig.5). In this situation, a probe is used to catch the glass droplet and start the fiber drawing on the drum.

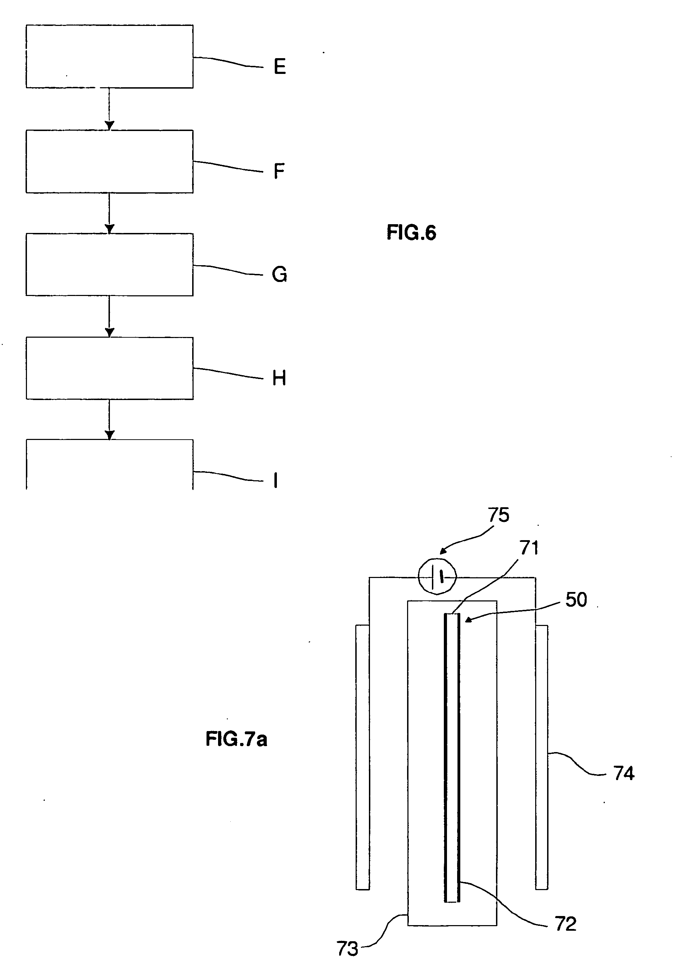

Consequently, as can be seen in Fig.6, the second group of fabricating the infrared transmitting fiber comprises the following steps. Once, in a step (A), the preform 20 has been obtained, in a step (60), the preform is put inside the graphite dye 22 and next, in a step (61), the preform-graphite set is put inside the first ring of the coil of the induction furnace 21. In another embodiment of the invention, the graphite dye is put firmly inside the ring of the coil and then the preform is put inside the graphite dye 22.

Next, in a step (B), the preform 20 is heated through the graphite dye 22 which has a very fast increase in its temperature due to the electrical current that flows through the coil when the induction furnace 21 is put into use. When the glass of the preform 20 has reached its softening point (on the same time the solid solution of the core boils), in a step (C), the glass starts to flow from the lower end of the graphite dye 22 and the glass droplet is caught by means on a probe and, in a step (D), it starts the fiber drawing on the fiber collecting drum.

It is important to highlight that the speed of the collecting drum determines the overall thickness of the fiber 50 whereas the cladding-core ratio is determined by the relation:

$$\frac{clad}{core} \, \alpha \, \frac{D_{out} - D_{in}}{D_{in}}$$

where $D_{out}$ is the outer diameter and $D_{in}$ is the inner diameter of the glass ampoule. The overall length of the fabricated fiber is determined by the height of the ampoule (due to the volume has to be the same, if an ampoule has a diameter of 30 mm and the fiber has a diameter of 0,3 mm, then Y=10000X, where X and Y are the lengths of ampoule and fiber respectively). This way, any fiber length can be manufactured with a single pass using the appropriate ampoule. Further, the quality of the interface between the core and the cladding is excellent and there are minor fluctuations on the fiber thickness caused by slight changes on the drum's speed.

On the other hand, during the whole process of fabricating the fiber 50, a small quantity of argon flow is applied inside the furnace so that no atmospheric air flows back inside the furnace. The pressure of said inert gas defines the diameter of the inner core of the fiber 50 due to the ampoule has one end closed and the other end opened in order to allow the inert gas flow. If the speed and/or the pressure are out of given windows of amplitude, the fiber cannot be fabricated.

In summary, with the described method it is possible to obtain fibers 50 of variable diameters and large lengths with adequate quality, the advantages of said method being the low cost and high efficiency in comparison to other widely used methods. Further, the fabrication takes places much faster than said used methods.

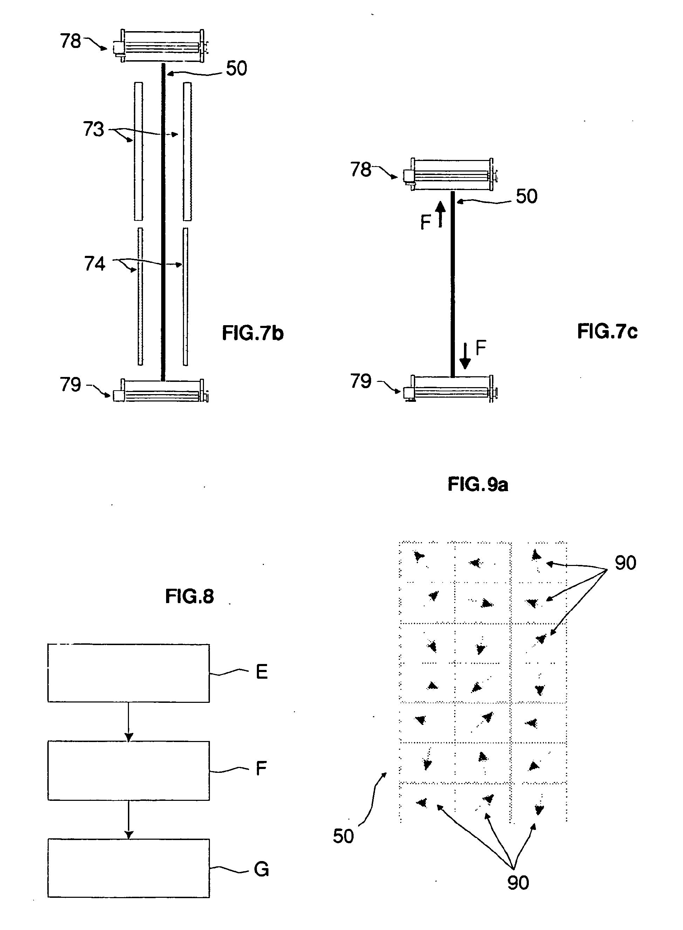

As can be seen in Fig.7a and Fig.7b, the treatment of the fabricated fiber 50 (with the corresponding core 71 and cladding 72) takes place using a setup comprising a heating element 73 and an orthogonal shaped capacitor 74 capable of creating electrostatic fields up to 1,2 kV between its plates, through a flyback transformer 75. There are also two drums (shown in Fig.7b) for the dynamic movement of the fiber 50 from one drum 78 in the beginning of the process to the other drum 79 at the end of it. Said treatment of the fabricated fiber must be performed because said fiber is not a transparent material in the infrared. After the treatment, the fiber becomes transparent, that is, the IR properties are enhanced by the described treatment (a post-fabricating electrical annealing process).

The heating element is a custom made cylindrical furnace 73 of 10 cm length capable of reaching temperatures up to 800 $\underline{o}$C. Basically, the furnace can generate homogeneous temperatures up to 400 $\underline{o}$C.

The capacitor 74 is also custom made with copper plates measuring 30 cm x 4 cm. The distance between the two conducting plates is of the order of centimetres, that is, the capacitor's plates are set to have a voltage difference of 1,2 kV creating a strong electrostatic field E between them. In the present embodiment, the distance between the plates is fixed to 1 cm.

The flyback transformer 75 is a custom DC power supply for high voltage transmission to the plates of the capacitor 74. Basically, the transformer can supply voltage of the order of 10 kV; therefore, due to the distance between the plates of the capacitor 74 is of the order of centimetres, the generated field across the fiber is of the order of 10 kV/cm.

In Fig.7b, the whole setup is vertically orientated whereas, in Fig.7a, the setup is not vertical (the capacitor 74 is in place in the oven). For this reason, depending on the selected setup, the method, in some points, is different. In general, both setups must achieve that the fiber will be warm during the electrical field annealing. This is the key factor. Therefore, both setups and processes are acceptable provided that the temperature of the fiber during annealing is larger than a critical value Tc.

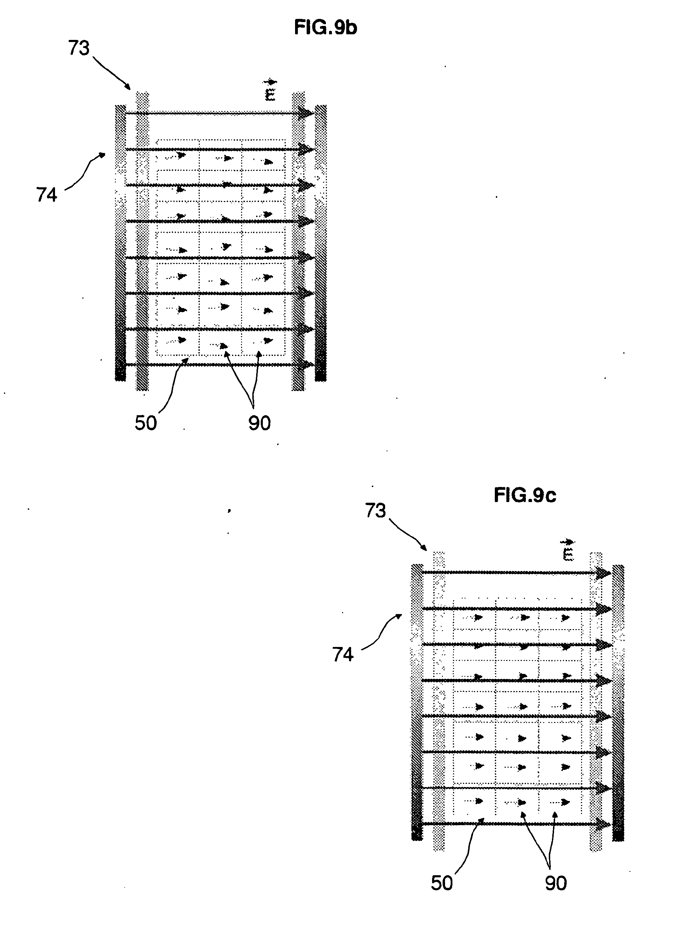

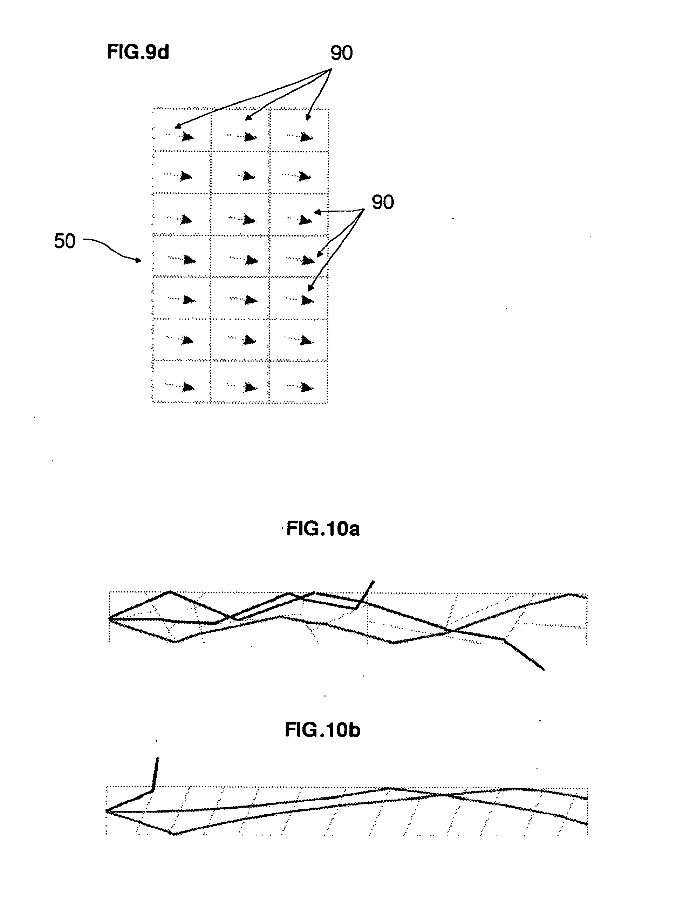

In case of Fig.7b, the third group of treating the fabricated infrared transmitting fiber 50 comprises the following steps as can be seen in Fig.8. Once the fiber 50 has been obtained, in a step (E), the fiber 50 is inserted into the treatment setup from the feeding drum 78 at very low speeds. The speed is adjusted so that each point of the descending fiber 50 stays for more than 20 minutes inside the furnace 73 which is set to have an inner temperature of 300$\underline{o}$C, that is, the fiber 50 is heated (step F) up to a temperature in which the fiber has any kind of "elasticity" of freedom of its electric dipoles. This feature is needed for moving said electric dipoles (as can be seen in figures 9) towards the direction of an applied electrostatic field E. This way, when the fiber 50 exits the furnace 73 and enters the capacitor 74, the temperature of the fiber is around 270$\underline{o}$C. The capacitor's plates are set to have a voltage difference of 1,2kV creating a strong electrostatic field E between them, which is applied, in step G, to the fiber (the fiber is warm enough). Further, the capacitor's plate length is long that when the fiber 50 reaches its lower end, the fiber's temperature is at level of the room temperature. Finally, when the fiber 50 leaves the capacitor's plates, the treated fiber is collected by the fiber receiving drum 79 which is set to rotate at the same speed as the fiber feeding drum 78.

In case of Fig.7a, the third group of treating the fabricated infrared transmitting fiber 50 comprises the following steps as can be seen in Fig.8. Once the fiber 50 has been obtained, in a step (E), the fiber 50 is inserted into the treatment setup from the feeding drum 78. Then the furnace 73 is switched on and the fiber is heated (step F) up to a temperature of around 270$\underline{o}$C (the proper temperature can be 230-270$\underline{o}$C and sometimes higher or lower). When the fiber 50 reaches said temperature, the capacitor 74 is supplied by the high voltage and the electrostatic field E is applied (step G) to the fiber, so that the electric annealing (heat together with electric field) takes place. The annealing period can be from 5 to 30 minutes. Then, the furnace 73 is switched off while the capacitor 74 remains on until the temperature reaches the room level. The collecting drum 79 collects the treated fiber.

In any case, during electric annealing a tensile stress can be applied. This way, the fiber diameter can dramatically be reduced (down to a few tens of microns, for example down to 40-50 microns) but the important is that under certain electric field and tensile stress the transmissivity becomes better. Fig.7c shows an example of tensile application: the drum 78 runs slower than the other drum 79 allowing the industrial application of tensile stress (a force F in both ways is applied).

The electric field can typically be from a few V/m (corresponding to temperatures close to melting point of approximately 300$\underline{o}$C) up to 1 MV/m (for temperatures of approximately 200$\underline{o}$C).

The tensile stress can be of the order of 10-100 MPa depending on the temperature (10 MPa for high temperatures, approximately 300$\underline{o}$C, 100 MPa for temperatures of approximately 200$\underline{o}$C).

Then, according to experimental data:
Temperature 280$\underline{o}$C, tensile stress 100 MPa resulted in fiber diameter of approximately 50 microns. Consequently, 280$\underline{o}$C and electric field of 300 kV/m (or 3 kV/cm) resulted in transmissivity > 80 db.

The production line "segment by segment" is understandable and it is known as "area annealing" that means that the fiber is driven in a given length of an open type furnace with uniform temperature. After this given length, the electric field can be applied. Then the fiber is driven out of the furnace 73 and runs for a given length in order to cool down. Said described treatment is faster than the previous one.

This way, by said described treatments, the infrared transmittance properties of the fabricated fiber 50 are improved, that is, the IR transmittance properties are enhanced by the post-manufacturing electrical annealing process. More specifically, the treatment achieves the improvement in optical quality through the relaxation of the fiber's core 71 caused by the thermal annealing, and the rearrangement of the more flexible dipoles due to the strong field E (a better structural periodicity is achieved inside the core). In summary, by treating the fabricated fiber 50 with the proposed treatment setups, the fibers can exhibit transmission levels of 40% and above at the near IR region which is acceptable for many applications.

Fig.9 illustrates the distribution of the electric dipoles of the fiber during its treatment, that is, the electric annealing operation. Fig.9a illustrates the fiber in the as-cast stage (the fabricated fiber before the field annealing), showing a rather random distribution of the electric dipoles. Fig.9b illustrates how the electric field E generated by the capacitor 74 penetrates perpendicularly the fiber, when it is heated, resulting in an orientation of the electric dipoles towards the direction of the electric field. Fig.9c illustrates how the electric field E continues to penetrate perpendicularly the fiber until fiber is cooled down, when the temperature is lowered to the room level (i.e. the furnace 73 is switched off), resulting in remaining of the orientation of the electric dipoles towards the direction of the electric field E. Fig.9d shows the distribution of the electric dipoles when the electric field E is removed after the temperature of the fiber reaches the room temperature, resulting an almost parallel orientation of the electric dipoles.

Hereafter experimental results of the method according to the invention will be described.

By using the fiber fabrication setup a series of fibers was produced with diameters ranging from 200 to 800 $\mu$m and lengths (in the order of meters) analogous to the preform ampoule's length. The results obtained from a 300 $\mu$m and a 600 $\mu$m diameter fiber will be described because they are indicative of the strengths and weaknesses of the fabricating and treating setups. Both of the fibers have been optically measured using a Perking Elmer Spectrum Gx Fourier Transform Infrared Spectrometer (FTIR).

The two fibers exhibited very different transmittance levels after their fabrication from the induction furnace setup. The 300 $\mu$m fiber, which had a smaller core than the 600 $\mu$m one, had a reasonable transmittance of around 30% (30% in the near infrared and 20% in the mid infrared region) right after its fabrication. The other fiber transmitted only 10% light (15% in the near infrared region and around 6-8% in the mid-IR). A difference in transmittance between the two fibers was expected due to the fact that the larger core of a fiber involves more losses inside it.

After the fabrication and optical measurement of the fibers, thermal annealing operation was carried out. The annealing conditions were identical for both fibers and specifically were 200°C-220°C for a 2-2,25 hour period. This process demonstrated an increase in transmittance of around 5% in the case of the 600$\mu$m fiber, while the 300$\mu$m fiber had a decrease in optical performance. The fact that the larger core diameter fiber was upgraded through thermal annealing might be due to stress relieving inside the fiber core, while the mechanism that led the smaller diameter fiber to lose optical performance is not yet clearly understood. A first estimation might be that the degradation is caused by thermal rearrangement of periodically arranged crystals inside the core.

Of great interest is the performance of the fibers after the application of both heat and the electrical field on them. The method described in the fiber treatment setup was used for both the 300$\mu$m and the 600$\mu$m fibers.

The small diameter fiber was transmitting 45% of the incident near-mid infrared light, after the process was completed. This net increase of 15% is a great improvement as it is around a 50% gain on the optical performance.

The larger diameter fiber (600$\mu$m) was transmitting 25% of the incident radiation both in near and mid infrared region. Comparing to the 10% after its production or the 15% after the annealing the gain in performance is significant.

In order to have a clearer picture of the fiber treatment's setup efficiency an experiment was carried out on a waveguide. The waveguide was produced in a laboratory by casting solid solution of AgClBr inside a hollow Pyrex glass cylinder. This way a non flexible analogous to the fibers was produced with core diameter of around 700$\mu$m. The advantages of using such a waveguide was the precision with which we could measure near infrared regions in the FTIR.

The as-cast waveguide transmitted around 15% of the incident light. The treatment of the waveguide followed exactly the same steps that were made in the fibers. The difference in performance in this case was much larger. In the near infrared region transmittance has even reached 90%. In the near to mid IR region a steady decrease in performance is evident with a sharp drop at 2,5 $\mu$m (4000cm$^{-1}$). This degradation of the waveguide's performance might be due to discontinuities of the waveguide's core. These discontinuities might originate from the casting of the core's material inside the waveguide. Still the performance gain in this case is indicative of the setup's capabilities.

Further, electric field annealing improves the transmittance factor of the fiber, by means of moving the transmittance response dependence on wavelengths closer to 100%.

The fact that after the fiber annealing, no or slight optical improvement is observed leads to the conclusion that the main factor of performance improvement is the electrostatic field. The exact mechanism of the field's contribution to this is still unknown but first estimations show that it must be the slight reorientation of electric dipoles inside the fiber core. This way a slightly more periodical structure is produced, less prone to optical losses on the grain boundaries inside the core.

Nevertheless, the stage that needs the most attention is the production stage which produces, though acceptable, weakly transmitting fibers. A major factor of this is the relatively high amount of impurities that are entered inside the fiber core after the preparation process. The ampoule is not sealed after its filling with the core material, so it is safe to assume that the core is infected with a moderate amount of impurities at this stage. By applying measurements to improve purity before, throughout and after the preparation stages, like sealing the ampoule or cleaning the ampoule with more advanced techniques prior to material insertion will definitely improve fiber quality.

In Fig.10 it is possible to see the transmission of an electromagnetic wave in a fiber. Fig.10a shows the transmission in an as-cast fiber whereas Fig.10b shows the transmission in an electrically annealed fiber.

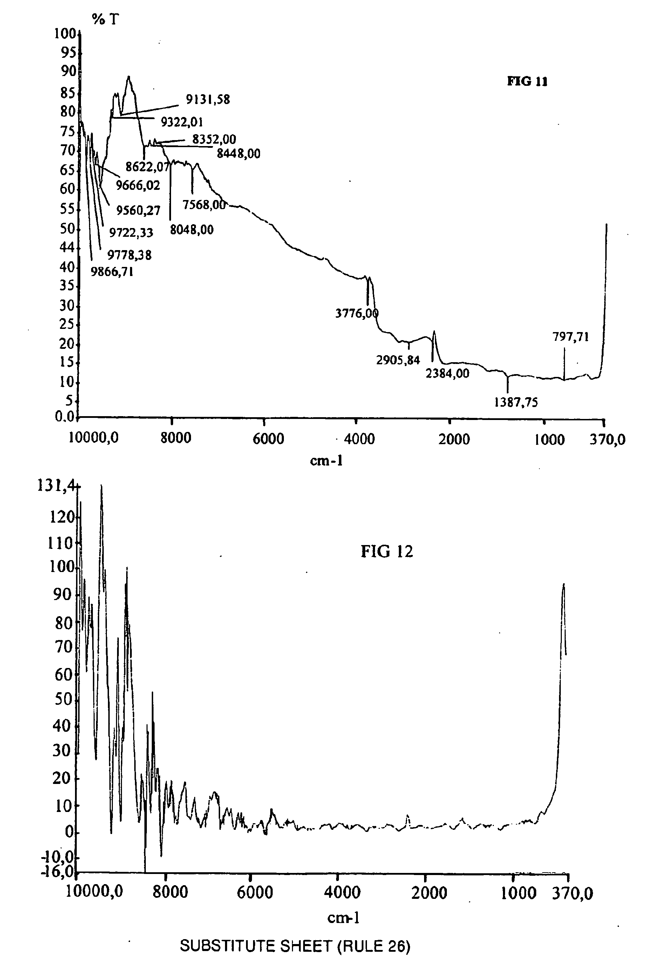

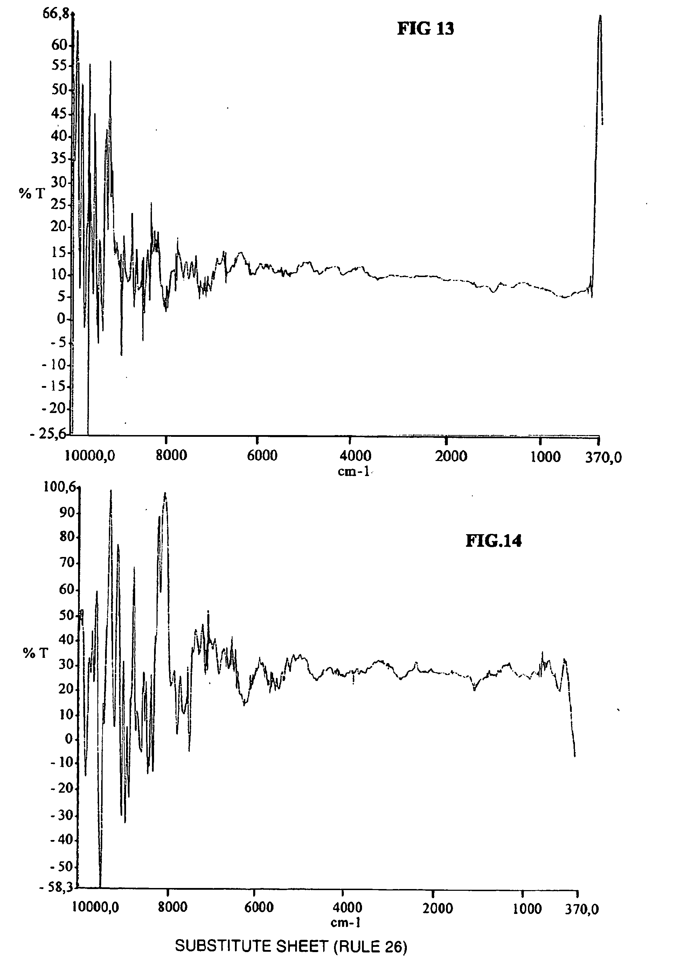

Fig.11 illustrates a graphical representation of a FTIR response of the bulk inner material of the fiber (Ag-Br-Cl), Fix.12 illustrates a graphical representation of an indicative FTIR response of the as-cast fiber, Fix. 13 illustrates a graphical representation of an indicative FTIR response of the a after heat annealing in 100°C for 1 hour; whrereas Fig.14 illustrates a graphical representation of an indicative FTIR response of the fiber after heat annealing in 100% for 1 hour with simultaneous application of electric field.

## Claims

1. A method for producing an infrared transmitting fiber (50) comprising the steps of:

   A) Providing a preform (20) of the infrared transmitting fiber (50) to be produced, said preform comprising a receptacle, which is the precursor of the fiber's cladding (72), and a solid solution provided inside said receptacle, said solid solution being the precursor of the fiber's core (71);
   B) Heating the fiber's preform (20) up to a temperature in which the receptacle softens and the solid solution melts;
   C) Collecting the flow generated by the softened receptacle;
   D) Drawing the fiber (50) from the collected flow further **characterised in** :
   F) Heating the provided fiber (50) up to a temperature in which its electric dipoles (90) are free;
   G) Applying an electrostatic field (E) to the heated fiber (50) for moving the electric dipoles (90) towards the direction of the applied electrostatic field (E).

2. A method according to claim 1, wherein in step (G) the electrostatic field (E) is applied until the fiber (50) is cooled down.

3. A method according to any of claims 1 or 2, further comprising, before step (A), the steps of:

   H) Introducing appropriate amounts of ultrapure powders inside the receptacle;
   I) Heating the receptacle up to a temperature in which the powders melt;
   J) Cooling down the receptacle to room temperature for obtaining the solid solution inside the receptacle.

4. A method according to any of the preceding claim, wherein the receptacle is made of glass.

5. A method according to any of the preceding claims, wherein the solid solution is a silver halide.

6. A method according to claim 5, wherein the silver halide comprises AgBr and AgCl in 1:1 mole analogy.

7. A method according to any of the preceding claims, wherein, in step (B), the fiber's preform (20) is heated up to a temperature comprised between 600-800°C for a period comprised between 0,25-1,5 minutes.

8. A method according to any of claims 2 to 7, wherein, in step (F), the provided fiber (50) is heated up to a temperature comprised between 200-350°C for a period comprised between 15-30 minutes.

9. A method according to any of claims 2 to 8, wherein, in step (G) the applied electrostatic field (E) is up to 1,2 kV.

10. A method according to any of claims 3 to 9, wherein, in step (H), the ultrapure powders comprise AgBr and AgCl, and wherein, in step (I), the receptacle is heated up to a temperature comprised between 400-500°C for a period comprised between 1-2 hours.

11. A system for producing and infrared transmitting fiber (50), from a preform (20) which comprises a receptacle, said receptacle being the precursor of the fiber's cladding (72), and a solid solution provided inside said receptacle, said solid solution being the precursor of the fiber's core (71), said system comprising means for providing the preform (20); means for heating the preform (20); means for collecting the flow generated by the heated preform (20); means for drawing the fiber (50) from the collected flow; **characterised in that** it comprises means (73) for heating said provided fiber (50); and means for applying an electrostatic field (E) to the heated fiber (50).

12. A system according to claim 11, wherein the means for collecting the flow comprise a drum.

13. A system according to claim 11 or 12, further comprising means for introducing appropriate amounts of ultrapure powders inside the receptacle; means for heating the receptacle up to a temperature in which the powders melt; and means for cooling down the receptacle to room temperature.

14. A system according to claim 13, wherein the means for heating the receptacle up to a temperature in which the powders melt comprise an inert atmosphere furnace.

15. A method for treating an infrared transmitting fiber comprising the steps of:

K) Providing the fiber (50) to be treated;
further **characterised in**
L) Heating the provided fiber (50) up to a temperature in which its electric dipoles (90) are free;
M) Applying an electrostatic field (E) to the heated fiber (50) for moving the electric dipoles (90) towards the direction of the applied electrostatic field (E).

**Patentansprüche**

1. Verfahren zur Herstellung einer Infrarotlicht leitenden Faser (50), das folgende Verfahrensschritte umfasst:

A) Bereitstellen einer Vorform (20) der herzustellenden Infrarotlicht leitenden Faser (50), wobei die besagte Vorform ein Aufnahmegefäß, das die Vorstufe des Fasermantels (72) darstellt, und eine feste Lösung, die in diesem Aufnahmegefäß bereitgestellt wird und die Vorstufe des Faserkerns (71) ist, umfasst.
B) Erwärmen der Faservorform (20) auf eine Temperatur, bei der das Aufnahmegefäß erweicht und die feste Lösung schmilzt;
C) Auffangen des vom erweichten Aufnahmegefäß freigesetzten Materialflusses;
D) Ziehen der Faser (50) aus dem aufgefangenen Materialfluss;
weiterhin **gekennzeichnet durch**:
F) Erwärmen der bereitgestellten Faser (50) auf eine Temperatur, bei der ihre elektrischen Dipole (90) frei beweglich sind;
G) Anlegen eines elektrostatischen Feldes (E) an die erwärmte Faser (50) zur Ausrichtung der elektrischen Dipole (90) zur Richtung des angelegten elektrostatischen Feldes (E) hin.

2. Verfahren nach Anspruch 1, worin in Verfahrensschritt (G) das elektrostatische Feld (E) solange angelegt wird, bis die Faser (50) abgekühlt ist.

3. Verfahren nach einem der Ansprüche 1 oder 2, das vor Verfahrensschritt (A) weiterhin folgende Verfahrensschritte umfasst:

H) Dotierung des Aufnahmegefäßes mit angemessenen Mengen hochreiner Pulver;
I) Erwärmen des Aufnahmegefäßes auf eine Temperatur, bei der die Pulver schmelzen;
J) Abkühlen des Aufnahmegefäßes auf Raumtemperatur, um die feste Lösung im Innern des Aufnahmegefäßes zu erhalten

4. Verfahren nach einem der vorstehenden Ansprüche, worin das Aufnahmegefäß aus Glas gefertigt ist.

5. Verfahren nach einem der vorstehenden Ansprüche, worin die feste Lösung ein Silberhalogenid ist.

6. Verfahren nach Anspruch 5, worin das Silberhalogenid AgBr und AgCl in einem Molverhältnis von 1:1 umfasst.

7. Verfahren nach einem der vorstehenden Ansprüche, worin in Verfahrensschritt (B) die Vorform (20) der Faser während einer Zeitspanne von 0,25 bis 1,5 Minuten auf eine Temperatur von 600 bis 800°C erwärmt wird.

8. Verfahren nach einem der Ansprüche 2 bis 7, worin in Verfahrensschritt (F) die bereitgestellte Faser (50) während einer Zeitspanne von 15 bis 30 Minuten auf eine Temperatur von 200 bis 350°C erwärmt wird.

9. Verfahren nach einem der Ansprüche 2 bis 8, worin das angelegte elektrostatische Feld (E) in Verfahrensschritt (G) bis zu 1,2 kV stark ist.

10. Verfahren nach einem der Ansprüche 3 bis 9, worin die hochreinen Pulver in Verfahrensschritt (H) AgBr und AgCl umfassen, und worin das Aufnahmegefäß in Verfahrensschritt (I) während einer Zeitspanne von 1 bis 2 Stunden auf eine Temperatur von 400 bis 500°C erwärmt wird.

11. Anlage zur Herstellung einer Infrarotlicht leitenden Faser (50), ausgehend von einer Vorform (20) die ein Aufnahmegefäß und eine feste Lösung, die in diesem Aufnahmegefäß bereitgestellt ist, umfasst, wobei besagtes Aufnahmegefäß die Vorstufe des Fasermantels (72) darstellt, und wobei die besagte Lösung die Vorstufe des Faserkerns (71) ist, wobei die Anlage umfasst: Mittel zur Erstellung der Vorform (20); Mittel zum Erwärmen der Vorform (20); Mittel zum Auffangen des Materialflusses, der durch die erwärmte Vorform (20) freigesetzt wird; und Mittel zum Ziehen der Faser (50) aus dem aufgefangenen Materialfluss; **dadurch gekennzeichnet, dass** die Anlage weiterhin Mittel (73) zum Erwärmen der besagten bereitgestellten Faser (50); und Mittel zum Anlegen eines elektrostatischen Feldes (E) an die erwärmte Faser (50) umfasst.

12. Anlage nach Anspruch 11, worin die Mittel zum Auffangen des Materialflusses eine Trommel umfassen.

13. Anlage nach Anspruch 11 oder 12, die weiterhin umfasst: Mittel zur Dotierung des Aufnahmegefäßes mit angemessenen Mengen hochreiner Pulver; Mittel zum Erwärmen des Aufnahmegefäßes auf eine Temperatur, bei der die Pulver schmelzen; und Mittel zum Abkühlen des Aufnahmegefäßes auf Raumtemperatur.

14. Anlage nach Anspruch 13, worin die Mittel zum Erwärmen des Aufnahmegefäßes auf eine Temperatur, bei der die Pulver schmelzen, einen Schutzgasofen umfassen.

15. Verfahren zur Behandlung einer Infrarotlicht leitenden Faser, das folgende Verfahrensschritte umfasst:

   K) Erstellen der zu behandelnden Faser (50); weiterhin **gekennzeichnet durch**:
   L) Erwärmen der bereitgestellten Faser (50) auf eine Temperatur, bei der ihre elektrischen Dipole (90) frei beweglich sind;
   M) Anlegen eines elektrostatischen Feldes (E) an die erwärmte Faser (50) zur Ausrichtung der elektrischen Dipole (90) zur Richtung des angelegten elektrostatischen Feldes (E) hin.


**Revendications**

1. Procédé pour fabriquer une fibre transmettant les infrarouges (50) comprenant les étapes consistant à :

   A) Fournir une préforme (20) de la fibre transmettant les infrarouges (50) à fabriquer, ladite préforme comprenant un récipient, qui est le précurseur de la gaine (72) de la fibre, et une solution solide fournie à l'intérieur dudit récipient, ladite solution solide étant le précurseur du coeur (71) de la fibre ;
   B) Chauffer la préforme (20) de la fibre jusqu'à une température à laquelle le récipient se ramollit et la solution solide fond ;
   C) Recueillir l'écoulement généré par le réceptacle ramolli ;
   D) Tirer la fibre (50) à partir de l'écoulement recueilli ;
   **caractérisé en outre par** :
   F) Un chauffage de la fibre (50) fournie jusqu'à une température à laquelle ses dipôles électriques (90) sont libres ;
   G) L'application d'un champ électrostatique (E) à la fibre chauffée (50) pour déplacer les dipôles électriques (90) en direction du champ électrostatique (E) appliqué.

2. Procédé selon la revendication 1, dans lequel dans l'étape (G) le champ électrostatique (E) est appliqué jusqu'à ce que la fibre (50) soit refroidie.

3. Procédé selon l'une quelconque des revendications 1 ou 2, comprenant en outre, avant l'étape (A), les étapes consistant à :

   H) Introduire des quantités appropriées de poudres ultra-pures à l'intérieur du récipient ;
   I) Chauffer le récipient jusqu'à une température à laquelle les poudres fondent ;
   J) Refroidir le récipient à la température ambiante pour obtenir une solution solide à l'intérieur du récipient.

4. Procédé selon l'une quelconque des revendications précédentes, dans lequel le récipient est constitué de verre.

5. Procédé selon l'une quelconque des revendications précédentes, dans lequel la solution solide est un halogénure d'argent.

6. Procédé selon la revendication 5, dans lequel l'halogénure d'argent comprend AgBr et AgCl en analogie molaire 1:1.

7. Procédé selon l'une quelconque des revendications précédentes, dans lequel, dans l'étape (B), la préforme (20) de fibre est chauffée jusqu'à une température comprise entre 600 et 800 °C pendant une période comprise entre 0,25 et 1,5 minute.

8. Procédé selon l'une quelconque des revendications 2 à 7, dans lequel, dans l'étape (F), la fibre (50) fournie est chauffée jusqu'à une température comprise entre 200 et 350 °C pendant une période comprise entre 15 et 30 minutes.

9. Procédé selon l'une quelconque des revendications 2 à 8, dans lequel, dans l'étape (G) le champ électrostatique appliqué (E) va jusqu'à 1,2 kV.

10. Procédé selon l'une quelconque des revendications 3 à 9, dans lequel, dans l'étape (H), les poudres ultra-pures comprennent AgBr et AgCl, et dans lequel, dans l'étape (I), le récipient est chauffé jusqu'à une température comprise entre 400 et 500 °C pendant une période comprise entre 1 et 2 heures.

11. Système pour fabriquer une fibre transmettant les infrarouges (50), à partir d'une préforme (20) qui comprend un récipient, ledit récipient étant le précurseur de la gaine (72) de la fibre, et une solution solide fournie à l'intérieur dudit récipient, ladite solution solide étant le précurseur du coeur (71) de la fibre, le système comprenant des moyens pour fournir la préforme (20) ; des moyens pour chauffer la préforme (20) ; des moyens pour recueillir l'écoulement généré par la préforme (20) chauffée ; et des moyens pour tirer la fibre (50) à partir de l'écoulement recueilli ; **caractérisé en ce qu'**il comprend des moyens (73) pour chauffer ladite fibre (50) fournie ; et des moyens pour appliquer un champ électrostatique (E) à la fibre chauffée (50).

12. Système selon la revendication 11, dans lequel les moyens pour recueillir l'écoulement comprennent un fût.

13. Système selon la revendication 11 ou 12, comprenant en outre des moyens pour introduire des quantités appropriées de poudres ultra-pures à l'intérieur du récipient ; des moyens pour chauffer le récipient jusqu'à une température à laquelle les poudres fondent ; et des moyens pour refroidir le récipient à la température ambiante.

14. Système selon la revendication 13, dans lequel les moyens pour chauffer le récipient jusqu'à une température à laquelle les poudres fondent comprennent un four à atmosphère inerte.

15. Procédé pour traiter une fibre transmettant les infrarouges comprenant les étapes consistant à :

> K) Fournir la fibre (50) à traiter ;
> **caractérisé en outre par** :
> L) Un chauffage de la fibre (50) fournie jusqu'à une température à laquelle ses dipôles électriques (90) sont libres ;
> M) L'application d'un champ électrostatique (E) à la fibre chauffée (50) pour déplacer les dipôles électriques (90) en direction du champ électrostatique (E) appliqué.

**FIG.1**

A.1

A.2

A.3

A.4

20

22

21

**FIG.2**

**FIG.3**

**FIG.4**

**FIG.5**

**FIG.6**

**FIG.7a**

78 —

50

73

74

**FIG.7b**

79 —

78 —

50

F ↑

**FIG.7c**

F ↓

79 —

**FIG.9a**

90

**FIG.8**

E

F

G

50

90

## FIG.9b

## FIG.9c

**FIG.9d**

90

50

90

**FIG.10a**

**FIG.10b**

FIG 11

FIG 12

18

**FIG 13**

**FIG.14**

**EP 2 024 290 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 19822092771 A
- US 4978376 A
- US 4557742 A

### Non-patent literature cited in the description

- **L.N. Butvina ; E.M. Dianov ; N.V. Lichkova,.** *Proc. of SPIE,* vol. 4083, 238-253
- **V.G. Artjushenko ; L.N. Butvina ; V. V. Vojtsekhovsky ; E.M. Dianov ; J.G. Kolesnikov.** *J.of Lightwave Technology,* vol. LT-4 (4), 461-464
- **J. Keirsse ; C. Boussard-Pledel ; O. Loreal ; B. Bureau ; P. Leroyer ; B. Turlin ; J. Lucas.** *Vibrational Spectroscopy,* 2003, vol. 32, 23-32
- **S. Artjushenko ; V. Ionov ; K. Kalaidjian ; A. Kryukov ; E. Kuzin ; A. Lerman ; A. Prokhorov ; E.Stepanov.** *Proc. of SPIE,* vol. 2396, 25-35
- **Manabu Shibasaki ; Narihiko Kondo ; Hirotaka Tominaga ; Ken Aoki ; Eiichi Hasegawa ; Yoshiyuki Idota ; Toshimichi Moriwaki.** *J. Appl. Physiol.,* 1998, vol. 85 (3), 921-926
- **D. Le Coq ; C. Boussard-Pledel ; G. Fonteneau ; T.Pain ; B. Bureau ; J.L. Adam.** *Materials Research Bulletin,* 2003, vol. 38, 1745-1754
- **S. Hocde ; C. Boussard-Pledel ; G. Fonteneau, ; J. Lucas.** *Solid State Sciences,* 2001, vol. 3, 279-284
- **E. Rave ; D. Shemesh ; A. Katzir.** *Applied Physics Letters,* 2000, vol. 76 (14), 1795-1797
- **X. G. Tang ; X. X. Wang ; K. H. Chew ; H. L. W. Chan.** *Solid State Communications,* 2005, vol. 136, 89-93